# EUROPEAN PATENT APPLICATION

(11) **EP 4 756 432 A1**
(43) Date of publication of application: **10.06.2026**
(21) Application number: 25211271.9
(22) Date of filing: 27.10.2025
(51) Int. Cl.: G01N 35/00, B25J 9/10, B25J 15/00

(54) **ROBOTIC TRANSPORT FOR LABORATORY WORKSPACE**

(30) Priority: 04.12.2024 US 202463727812 P
(71) Applicant: Beckman Coulter, Inc., Brea, CA 92821 (US)
(72) Inventor: Klepfer, Scott, Brea, 92821 (US); Quinlan, Nathan, Brea, 92821 (US); Overhage, Andrew, Brea, 92821 (US); Davis, Zach, Brea, 92821 (US)
(74) Representative: Bevan, Emma

(57) **Abstract**

A robotic transport system includes a robotic gripper that moves in at least one of a first axis, a second axis, and a third axis to be adjacent to a first instrument. The first axis, the second axis, and the third axis are mutually perpendicular with respect to one another. The system controls the robotic gripper to pick up labware from the first instrument, moves the robotic gripper in at least one of the first axis, the second axis, and the third axis to be adjacent to a second instrument, adjusts the robotic gripper to change from a first profile to a second profile, and controls the robotic gripper to position the labware in the second instrument.

## Description

### BACKGROUND

Laboratory workspaces are specialized environments designed for scientific research, experimentation, and analysis. They are equipped with various tools and instruments tailored to the specific needs of the research being conducted, such as liquid handlers, centrifuges, flow cytometers, microbioreactors, and other instruments. Effective lab design ensures safety, efficiency, and organization, with clear separation of hazardous and non-hazardous areas, proper ventilation, and easy access to necessary resources. A well-organized laboratory promotes accurate results, minimizes contamination risks, and enhances collaboration among researchers.

### SUMMARY

In general terms, the present disclosure relates to a robotic transport system for a laboratory workspace. In one possible configuration, the robotic transport system adjusts a robotic gripper to change from a first profile to a second profile while in motion with or without holding labware at the same time. Various aspects are described in this disclosure, which include, but are not limited to, the following aspects.

One aspect relates to a robotic transport system comprising: a robotic gripper; and a processing circuitry having a memory for storing instructions which, when executed by the processing circuitry, cause the processing circuitry to: move the robotic gripper in at least one of a first axis, a second axis, and a third axis to be adjacent to a first instrument, the first axis, the second axis, and the third axis being mutually perpendicular with respect to one another; control the robotic gripper to pick up labware from the first instrument; adjust the robotic gripper to change from a first profile to a second profile; move the robotic gripper in at least one of the first axis, the second axis, and the third axis to be adjacent to a second instrument; and control the robotic gripper to position the labware in the second instrument.

Another aspect relates to a method of transporting labware between instruments in a laboratory workspace, the method comprising: moving a robotic gripper in at least one of a first axis, a second axis, and a third axis to be adjacent to a first instrument in the laboratory workspace, the first axis, the second axis, and the third axis being mutually perpendicular with respect to one another; controlling the robotic gripper to pick up labware from the first instrument; adjusting the robotic gripper to change from a first profile to a second profile; moving the robotic gripper in at least one of the first axis, the second axis, and the third axis to be adjacent to a second instrument in the laboratory workspace; and controlling the robotic gripper to position the labware in the second instrument.

A variety of additional aspects will be set forth in the description that follows. The aspects can relate to individual features and to combination of features. It is to be understood that both the foregoing general description and the following detailed description are exemplary and explanatory only and are not restrictive of the broad inventive concepts upon which the embodiments disclosed herein are based.

### DESCRIPTION OF THE FIGURES

The following drawing figures, which form a part of this application, are illustrative of the described technology and are not meant to limit the scope of the disclosure in any manner.
FIG. 1 illustrates an example of a laboratory workspace that includes a plurality of instruments for scientific research, experimentation, and analysis.
FIG. 2 schematically illustrates an example of a robotic transport system included in the laboratory workspace of FIG. 1.
FIG. 3 schematically illustrates an example of a robotic gripper that couples with the robotic transport system of FIG. 2.
FIG. 4 illustrates a top isometric view of an example of the robotic gripper of FIG. 3.
FIG. 5 illustrates a bottom isometric view of the robotic gripper of FIG. 4.
FIG. 6 illustrates an example of the robotic gripper of FIG. 4 showing a cut away portion of a gear housing illustrating one or more gears.
FIG. 7 illustrates an example of first and second arms of the robotic gripper of FIG. 4 having a first profile.
FIG. 8 illustrates an example of the first and second arms of the robotic gripper of FIG. 4 having a second profile.
FIG. 9 illustrates an example of the first and second arms of the robotic gripper of FIG. 4 having a third profile between the first and second profiles of FIGS. 7 and 8, respectively.
FIG. 10 schematically illustrates an example of a method of transporting labware between instruments in the laboratory workspace of FIG. 1, the method is performed by the robotic transport system of FIG. 2 which includes the robotic gripper of FIGS. 3-9.

### DETAILED DESCRIPTION

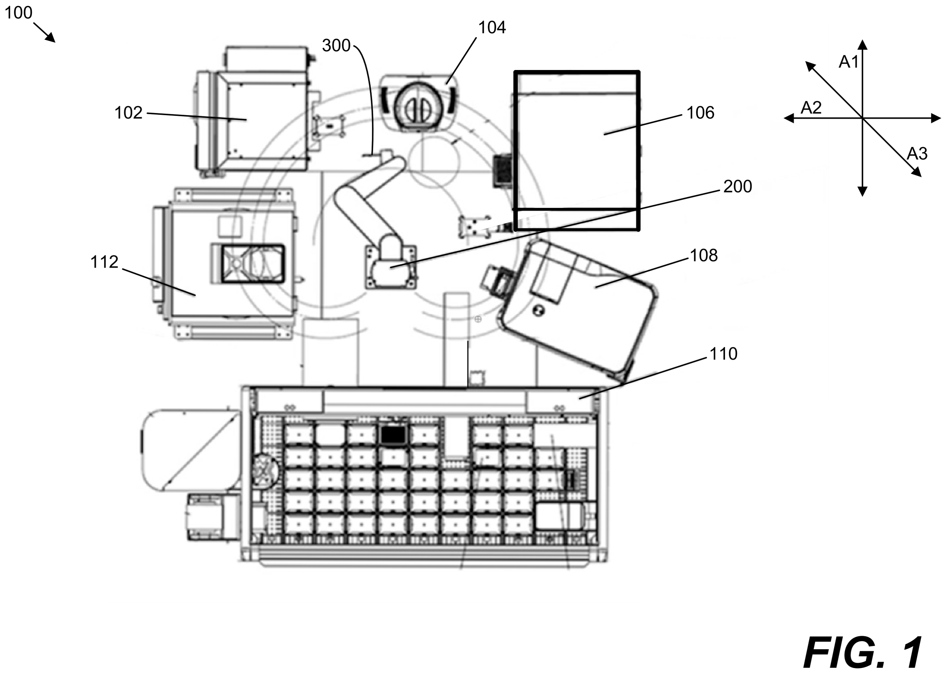

FIG. 1 illustrates an example of a laboratory workspace 100 that includes a plurality of instruments for scientific research, experimentation, and analysis. In this illustrative example, the laboratory workspace 100 includes an incubator 102, a freezer 104, a flow cytometer 106, an imaging reader 108, a liquid handler 110, and a centrifuge 112. The laboratory workspace 100 may include additional types of instruments or fewer instruments than what is shown in FIG. 1 such that the laboratory workspace 100 shown in FIG. 1 is provided for illustrative purposes.

The laboratory workspace 100 includes a robotic transport system 200. The robotic transport system 200 is configured to transport labware between the various instruments of the laboratory workspace 100 such as between the incubator 102, the freezer 104, the flow cytometer 106, the imaging reader 108, the liquid handler 110, and the centrifuge 112. The robotic transport system 200 is programmable to move in three or more axes. In some examples, the robotic transport system 200 includes a selective compliance articulated robot arm (SCARA).

As shown in FIG. 1, the robotic transport system 200 includes a robotic gripper 300. The robotic gripper 300 allows the robotic transport system 200 to pick up labware from one instrument and drop off the labware at another instrument inside the laboratory workspace 100. Examples of the labware that can be picked up and dropped off by the robotic gripper 300 include trays of containers containing samples of specimens that are to be processed and analyzed by the one or more of the instruments in the laboratory workspace 100.

The robotic transport system 200 moves the robotic gripper 300 in at least one of a first axis A1, a second axis A2, and a third axis A3 to position the robotic gripper 300 adjacent to the instruments in the laboratory workspace 100 which allows the robotic gripper 300 to pick up and drop off labware. The first axis A1, the second axis A2, and the third axis A3 are mutually perpendicular with respect to one another. As will be explained in more detail further below, the robotic gripper 300 can change its profile while in motion with or without holding labware item.

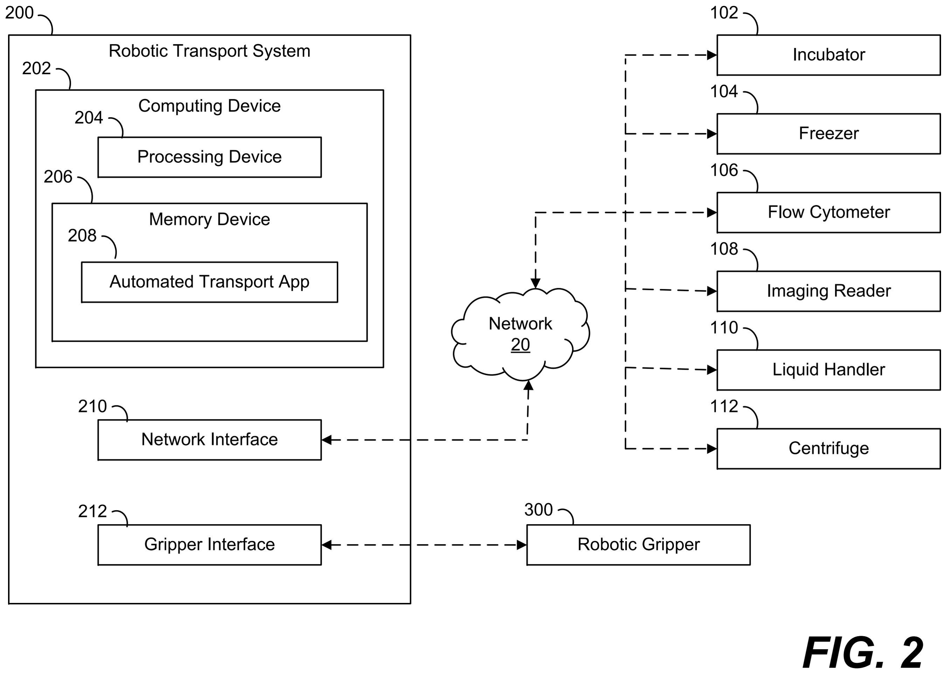

FIG. 2 schematically illustrates an example of the robotic transport system 200 included in the laboratory workspace 100. The robotic transport system 200 includes a computing device 202 having at least one processing device 204 and at least one memory device 206 that stores software instructions that, when executed by the at least one processing device 204, cause the at least one processing device 204 to perform the various aspects, functions, and operations described herein. In at least some examples, the at least one processing device 204 and the at least one memory device 206 are part of a processing circuitry having a memory.

The at least one processing device 204 is an example of a processing unit such as a central processing unit (CPU). The at least one processing device 204 can include one or more CPUs. In some examples, the at least one processing device 204 includes one or more digital signal processors, field-programmable gate arrays, and/or other types of electronic circuits.

The at least one memory device 206 is an example of a computer-readable data storage device that operates to store data and instructions for execution by the at least one processing device 204. The at least one memory device 206 includes computer-readable media, which includes any media that can be accessed by the at least one processing device 204. The computer-readable media can include computer-readable storage media and computer-readable communication media. The computer-readable storage media includes volatile and nonvolatile, removable and non-removable media implemented in any device that can store information such as computer-readable instructions, data structures, program modules, or other data. The computer-readable storage media can include random access memory, read only memory, electrically erasable programmable read only memory, flash memory, and other memory technology, including any medium that can be used to store information that can be accessed by the at least one processing device 204. The computer-readable storage media is non-transitory.

The computer-readable communication media embodies computer-readable instructions, data structures, program modules or other data in a modulated data signal such as a carrier wave or other transport mechanism and includes any information delivery media. The term "modulated data signal" refers to a signal that has one or more of its characteristics set or changed in such a manner as to encode information in the signal. The computer-readable communication media can include wired media such as a wired network or direct-wired connection, and wireless media such as acoustic, radio frequency, infrared, and other wireless media. Combinations of any of the above are within the scope of computer-readable media.

The at least one memory device 206 stores a transport application 208 that enables the robotic transport system 200 to automatically transport labware from one instrument to another inside the laboratory workspace 100. The transport application 208 enables the robotic transport system 200 to move labware directly between instruments in the laboratory workspace that require different gripper profiles or shapes by allowing a robotic gripper 300 to change its profile or shape while in motion with or without holding labware at the same time. Advantageously, this eliminates the need for a gripper exchange station, and thereby increases available floorspace in the laboratory workspace 100. Additionally, the time that it typically required to setup and train the robotic gripper 300 to interact with the gripper exchange station is eliminated.

Further, allowing a robotic gripper 300 to change its profile while in motion with or without holding labware at the same time eliminates the need for the robotic transport system 200 to interact with the gripper exchange platform, which reduces the time needed to transport labware from one instrument to another within the laboratory workspace 100. For example, the robotic transport system 200 can reduce the transport between instruments by about 13 seconds or more, which would be time required to interact with the gripper exchange platform.

The robotic transport system 200 includes a network interface 210 that facilitates connection to a network 20 that can include any type of wired or wireless connections or any combinations thereof. The network interface 210 can include wired interfaces and/or wireless interfaces. For example, the network interface 210 can be used to wirelessly connect the robotic transport system 200 to the network 20 such as through Wi-Fi and the like. Alternatively, or additionally, the network interface 210 can be used to connect the robotic transport system 200 to the network 20 using wired connections such as through Ethernet or Universal Serial Bus (USB) cables. The robotic transport system 200 communicates over the network 20 with the various instruments in the laboratory workspace 100 such as the incubator 102, the freezer 104, the flow cytometer 106, the imaging reader 108, the liquid handler 110, and the centrifuge 112.

The robotic transport system 200 further includes a robotic gripper interface 212 that allows the robotic transport system 200 to connect with the robotic gripper 300. The robotic gripper interface 212 provides a coupling to mechanically connect the robotic transport system 200 to the robotic gripper 300. The robotic gripper interface 212 further provides a connection to communicate signals between the robotic transport system 200 and the robotic gripper 300 such as for the robotic transport system 200 to communicate instructions to the robotic gripper 300, and for the robotic transport system 200 to receive data from the robotic gripper 300. The robotic gripper interface 212 can include interfaces such as wireless interfaces and/or wired interfaces to communicate the signals between the robotic transport system 200 and the robotic gripper 300 wirelessly and/or through one or more wired electrical connections.

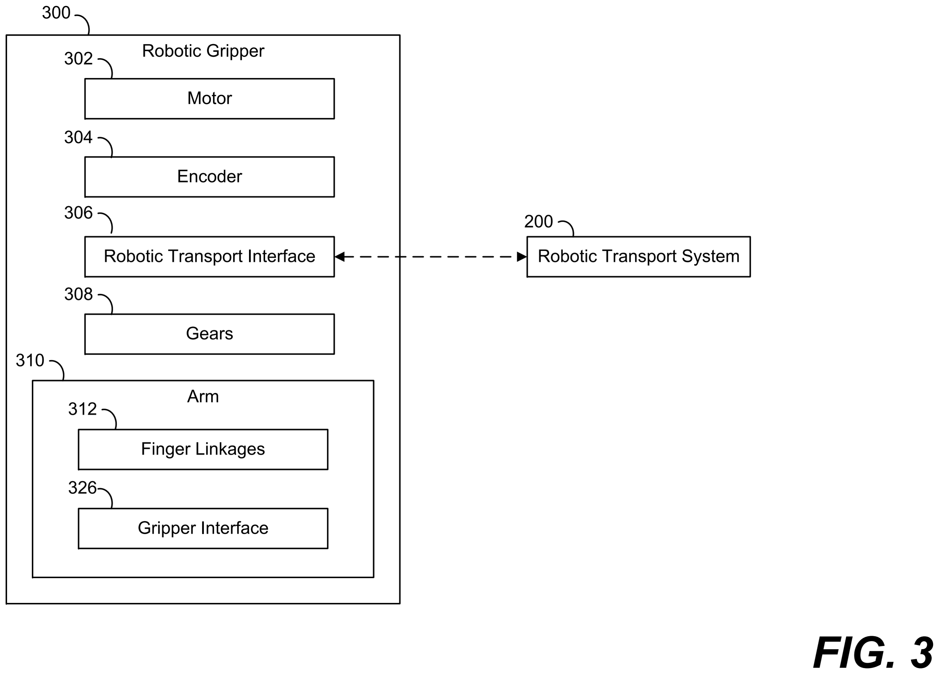

FIG. 3 schematically illustrates an example of the robotic gripper 300 that couples with the robotic transport system 200. The robotic gripper 300 includes at least one motor 302 that is controlled by the computing device 202 of the robotic transport system 200.

The robotic gripper 300 includes a robotic transport interface 306 that connects the robotic gripper 300 to the robotic transport system 200. The robotic transport interface 306 provides a coupling to mechanically connect the robotic gripper 300 to the robotic transport system 200. The robotic transport interface 306 further provides communication of signals between the robotic gripper 300 and the robotic transport system 200 such as for the robotic gripper 300 to receive instructions from the robotic transport system 200, and for the robotic gripper 300 to communicate data to the robotic transport system 200. The robotic transport interface 306 can include interfaces such as wireless interfaces and/or wired electrical interfaces to communicate the signals between the robotic transport system 200 and the robotic gripper 300 wirelessly and/or through one or more wired electrical connections.

The at least one motor 302 is controlled by the computing device 202 of the robotic transport system 200 to actuate one or more gears 308 to adjust the orientation of finger linkages 312 to adjust the profile of an arm 310 of the robotic gripper 300. The arm 310 further includes a gripper interface 326 that is used to pick up and drop off the labware between instruments.

In some examples, the robotic gripper 300 includes more than one arm such as a first arm and a second arm. In such examples, the robotic gripper 300 can include more than one motor such as a first motor to actuate the one or more gears to adjust the profile of the first arm, and a second motor to actuate the one or more gears to adjust the profile of the second arm.

The robotic gripper 300 can further include one or more encoders 304 that are used to monitor a position of the first and second arms. For example, the one or more encoders 304 can detect the current profile of the first and second arms as the arms move between instruments.

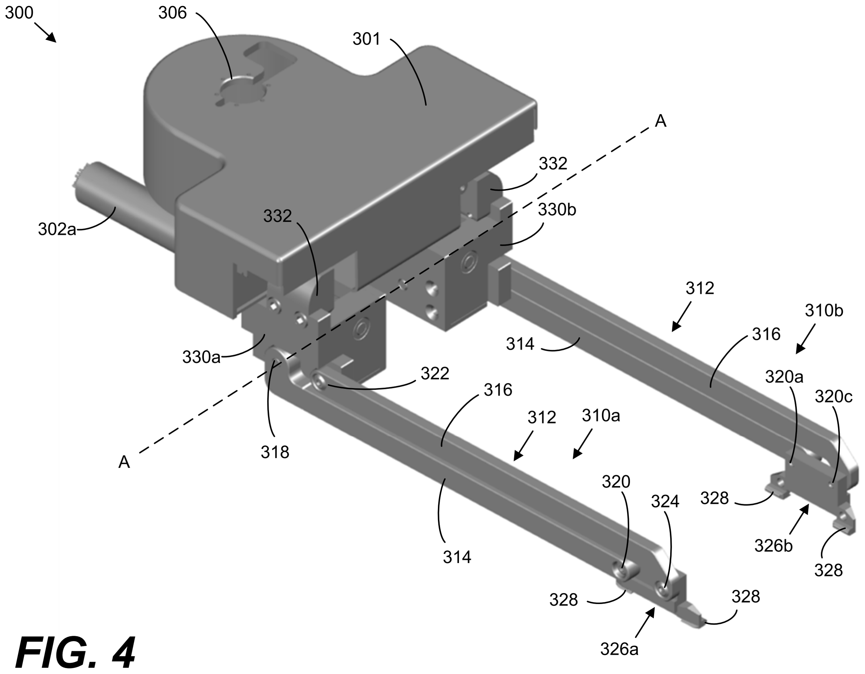

FIG. 4 illustrates a top isometric view of an example of the robotic gripper 300. As shown in FIG. 4, the robotic gripper 300 includes a housing 301 having the robotic transport interface 306 for connecting the robotic gripper 300 to the robotic transport system 200.

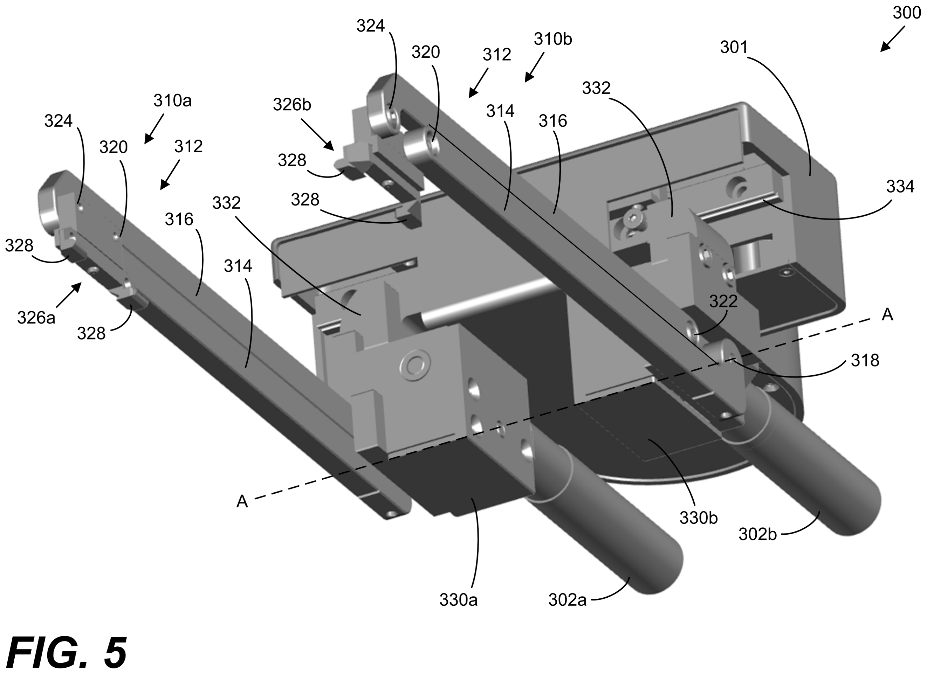

FIG. 5 illustrates a bottom isometric view of an example of the robotic gripper 300. Referring now to FIGS. 4 and 5, the robotic gripper 300 includes a first arm 310a and a second arm 310b. The first and second arms 310a, 310b each include the finger linkages 312, which include a first finger link 314 and a second finger link 316. The finger linkages 312 can be made of a softer material than the housing 301 and other components of the robotic gripper 300. In the event of a crash or user error, the finger linkages 312 are intended to be the failure point. This allows a user to quickly replace the finger linkages 312 using basic tools and return to operating the robotic transport system 200 within minutes of a crash, and can thereby advantageously reduce downtime in the laboratory workspace 100. Also, this can protect the at least one motor 302, the one or more gears 308, and other sophisticated components of the system.

In the first arm 310a, the first finger link 314 extends between a proximal end and a distal end. The first finger link 314 is rotatably connected to a first gear housing 330a at the proximal end. The first gear housing 330a houses the one or more gears 308 that are actuated by a first motor 302a to rotate the first finger link 314 about a first pivot point 318 on an axis of rotation A. For example, the one or more gears 308 when actuated by the first motor 302a can rotate in the first finger link 314 in a first direction (e.g., a clockwise direction) about the axis of rotation A. The one or more gears 308 when actuated by the first motor 302a can also rotate the first finger link 314 in a second direction (e.g., a counterclockwise direction) about the axis of rotation A. The first pivot point 318 can include a pin or similar type of component that is rotated by the one or more gears 308 when actuated by the first motor 302a of the robotic gripper 300.

The first finger link 314 is rotatably connected to a first gripper interface 326a by a second pivot point 320 at the distal end. The second pivot point 320 can include a pin or similar component allowing the first finger link 314 to rotate relative to the first gripper interface 326a.

As further shown in FIGS. 4 and 5, the first arm 310a includes a second finger link 316 that extends between a proximal end and a distal end. The second finger link 316 is rotatably connected to the first gear housing 330a by a third pivot point 322 at the proximal end. The second finger link 316 is rotatably connected to the first gripper interface 326a at the distal end by a fourth pivot point 324. The third pivot point 322 and the fourth pivot point 324 can each include a pin or similar type of component allowing the second finger link 316 to rotate relative to the first gear housing 330a and the first gripper interface 326a. The second finger link 316 follows the rotation of the first finger link 314. For example, the first finger link 314 causes the second finger link 316 to rotate in the first direction when the first finger link 314 rotates in the first direction, and the first finger link 314 causes the second finger link 316 to rotate in the second direction when the first finger link 314 rotates in the second direction.

The second arm 310b of the robotic gripper 300 includes similar components as the first arm 310a. For example, the second arm 310b includes the finger linkages 312, which include a first finger link 314 and a second finger link 316. The first finger link 314 of the second arm 310b extends between a proximal end and a distal end. The first finger link 314 is rotatably connected to a second gear housing 330b at the proximal end. A second motor 302b actuates one or more gears 308 in the second gear housing 330b to rotate the first finger link 314 about a first pivot point 318 on the axis of rotation A. For example, the one or more gears 308 when actuated by the second motor 302b cause the first finger link 314 to rotate about the axis of rotation A in a first direction (e.g., a clockwise direction) or to rotate about the axis of rotation A in a second direction (e.g., a counterclockwise direction). The first pivot point 318 can include a pin or similar type of component that can be rotated by the one or more gears 308 in the second gear housing 330b when actuated by the second motor 302b of the robotic gripper 300.

The first finger link 314 of the second arm 310b is also rotatably connected to a second gripper interface 326b by a second pivot point 320 at the distal end. In some examples, the second pivot point 320 includes a pin that allows the first finger link 314 to rotate relative to the second gripper interface 326b in the first direction or the second direction.

The second arm 310b includes a second finger link 316 that extends between a proximal end and a distal end. The second finger link 316 is rotatably connected to the second gear housing 330b by a third pivot point 322 at the proximal end, and is rotatably connected to the second gripper interface 326b by a fourth pivot point 324 at the distal end. The third pivot point 322 and the fourth pivot point 324 each include a pin allowing the second finger link 316 to rotate relative to the second gear housing 330b and the second gripper interface 326b.

The second finger link 316 of the second arm 310b follows the rotation of the first finger link 314 of the second arm 310b. For example, the first finger link 314 causes the second finger link 316 to rotate in the first direction when the first finger link 314 rotates in the first direction. The first finger link 314 further causes the second finger link 316 to rotate in the second direction when the first finger link 314 rotates in the second direction.

As shown in FIGS. 4 and 5, the first and second gripper interfaces 326a, 326b each include grippers 328 that are used to pick up and drop off the labware. The grippers 328 can be made of rubber or similar materials to prevent damage to the labware.

The first and second gear housings 330a, 330b each include a rail engagement component 332 that engages a rail 334 on the housing 301 of the robotic gripper 300. The rail engagement components 332 and the rail 334 allow a distance between the first and second arms 310a, 310b to be adjusted parallel to the axis of rotation A of the first and second arms 310a, 310b. For example, the first and second gear housings 330a, 330b can move along the rail 334 such that the first and second arms 310a, 310b are spaced closer together along the axis of rotation A of the first and second arms 310a, 310b. Also, the first and second gear housings 330a, 330b can move along the rail 334 such that the first and second arms 310a, 310b are spaced farther apart along the axis of rotation A of the first and second arms 310a, 310b.

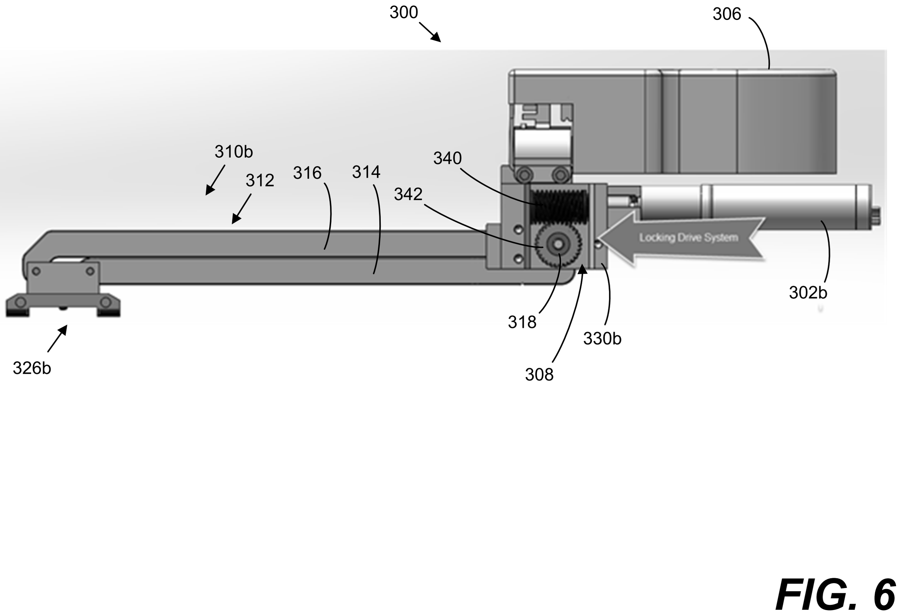

FIG. 6 illustrates an example of the robotic gripper 300 showing a cut away portion of the second gear housing 330b illustrating the one or more gears 308 inside the second gear housing 330b. While FIG. 6 illustrates an example of the second gear housing 330b, the one or more gears 308 in the first gear housing 330a can be the same as those shown in FIG. 6.

In this illustrative example, the one or more gears 308 in each of the first and second gear housings 330a, 330b include a worm gear 340 driven by the first and second motors 302a, 302b, respectively. The worm gear 340 engages a spur gear 342 to rotate the first pivot point 318 about the axis of rotation A. In the event of power loss, the worm gears 340 locks the first pivot point 318 in place preventing rotation of the first finger link 314 about the axis of rotation A. This locks the first and second arms 310a, 310b into a current profile such that the first and second arms 310a, 310b are prevented from changing their profile. This can prevent labware from being dropped and the first and second arms 310a, 310b from falling into and interfering with the instruments in the laboratory workspace 100, and thereby prevent damage to the instruments and to the robotic gripper 300 when the robotic transport system 200 loses power.

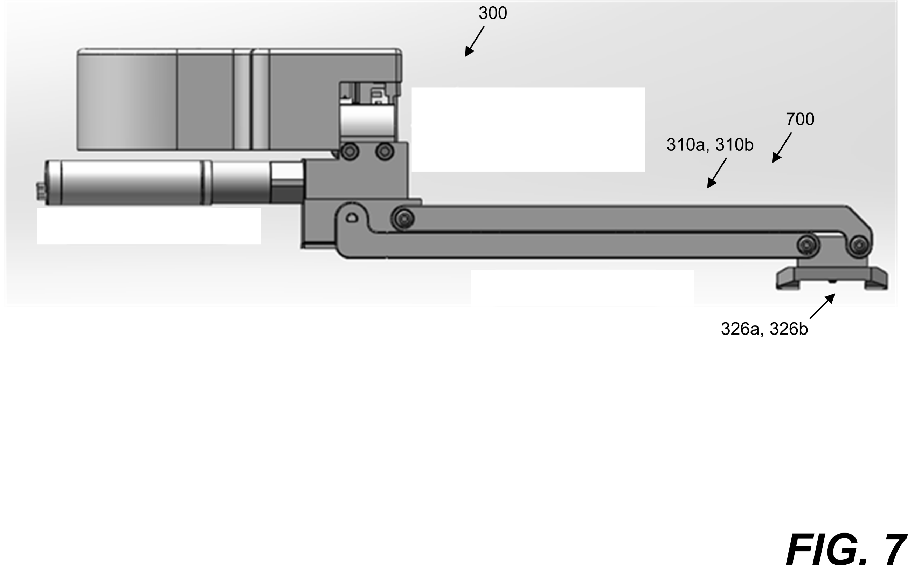

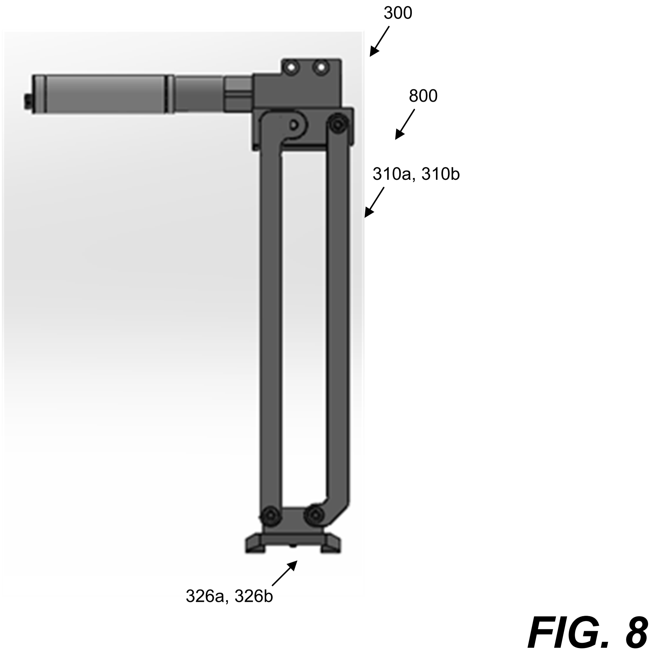

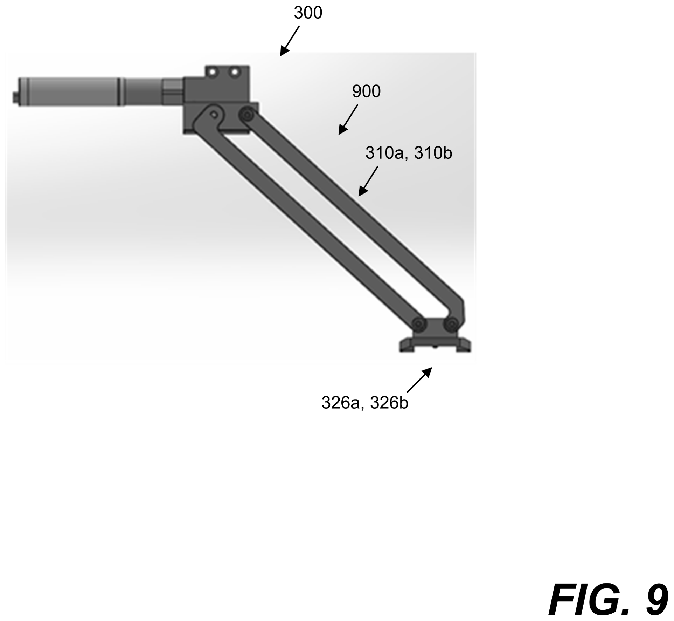

FIG. 7 illustrates an example of the first and second arms 310a, 310b having a first profile 700. FIG. 8 illustrates an example of the first and second arms 310a, 310b having a second profile 800. FIG. 9 illustrates an example of the first and second arms 310a, 310b having a third profile 900 which is between the first and second profiles of FIGS. 7 and 8, respectively. As described in the examples above, the first and second motors 302a, 302b can respectively control the profiles of the first and second arms 310a, 310b by actuating the worm gears 340 to rotate the spur gears 342 and the first pivot points 318 in the first direction about the axis of rotation A or in the second direction about the axis of rotation A. As shown in FIGS. 7-9, the robotic gripper 300 can be controlled to have more than two profiles.

In the example shown in FIG. 7, the first profile 700 causes the first and second arms 310a, 310b to be parallel in a horizontal position. For example, the first profile 700 is 0 degrees relative to the axis of rotation A (see FIGS. 4 and 5). As shown in FIG. 8, the second profile 800 causes the first and second arms 310a 310b to be parallel in a vertical position. For example, the second profile 800 is 90 degrees relative to the axis of rotation A. In the example shown in FIG. 9, the third profile 900 causes the first and second arms 310a, 310b to be parallel in a position between the first profile 700 and the second profile 800 such that the first and second arms 310a, 310b are positioned between a horizontal position and a vertical position. For example, the third profile 900 is between 0 degrees and 90 degrees relative to the axis of rotation A.

As shown in FIGS. 7-9, an orientation of the first and second gripper interfaces 326a, 326b of the first and second arms 310a, 310b, respectively, remains constant as the first and second arms 310a, 310b transition between the first profile 700 and the second profile 800. The orientation of the first and second gripper interfaces 326a, 326b is horizonal (i.e., 0 degrees relative to the axis of rotation A) such that the robotic gripper 300 does not disturb or spill any liquids that may be contained in the labware when moving the labware between instruments.

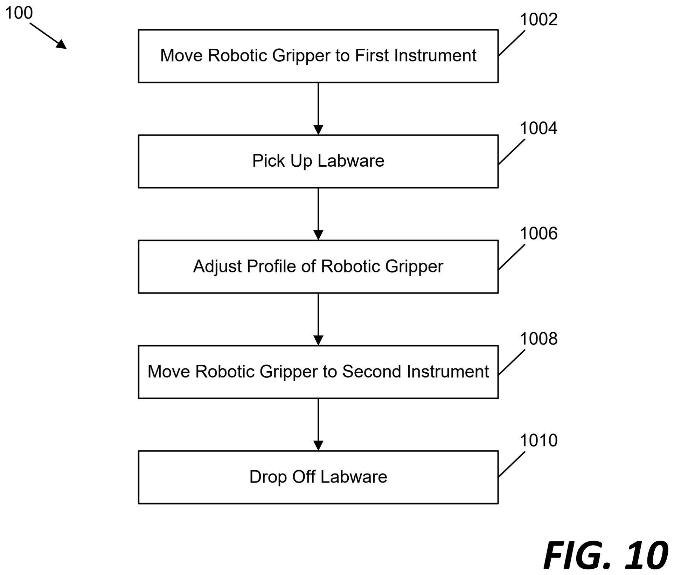

FIG. 10 schematically illustrates an example of a method 1000 of transporting labware between instruments in the laboratory workspace 100. The method 1000 can be performed by the robotic transport system 200 which includes the robotic gripper 300.

As shown in FIG. 10, the method 1000 includes an operation 1002 of moving the robotic gripper 300 in at least one of the first axis A1, the second axis A2, and the third axis A3 (see FIG. 1) to be adjacent to a first instrument in the laboratory workspace 100. As described above, the first axis A1, the second axis A2, and the third axis A3 are mutually perpendicular with respect to one another. As described above, the robotic transport system 200 can include a SCARA robot that can move the robotic gripper 300 in the first axis A1, the second axis A2, and the third axis A3. The first instrument can include any of the instruments in the laboratory workspace 100 such as the incubator 102, the freezer 104, the flow cytometer 106, the imaging reader 108, the liquid handler 110, the centrifuge 112, or other type of instrument.

The method 1000 includes an operation 1004 of controlling the robotic gripper 300 to pick up labware from the first instrument. Operation 1004 can include using the first and second gripper interfaces 326a, 326b to pick up the labware. The first and second gripper interfaces 326a, 326b include the grippers 328 that engage the labware to pick it up. Operation 1004 can include moving the first and second gear housings 330a, 330b along the rail 334 such that the first and second arms 310a, 310b move closer together along the axis of rotation A, which causes the first and second gripper interfaces 326a, 326b to engage and pick up the labware.

The method 1000 includes an operation 1006 of adjusting the robotic gripper 300 to change its profile. Operation 1006 can include adjusting the robotic gripper 300 to change from the first profile 700 to the second profile 800. Alternatively, operation 1006 can include adjusting the robotic gripper 300 to change from the second profile 800 to the first profile 700. As discussed above, the first profile 700 causes the first and second arms 310a, 310b of the robotic gripper 300 to be parallel in a horizontal position (i.e., 0 degrees relative to the axis of rotation A). The second profile 800 causes the first and second arms 310a 310b of the robotic gripper 300 to be parallel in a vertical position (i.e., 90 degrees relative to the axis of rotation A).

In yet further examples, operation 1006 can include adjusting the robotic gripper 300 to have a third profile between the first profile and the second profile. Operation 1006 can include adjusting the profile of the robotic gripper 300 based on the dimensions and orientations of the instruments in the laboratory workspace 100. During operation 1006, the orientations of the first and second gripper interfaces 326a, 326b which engage the labware remain constant (i.e., horizontal or level with the ground) as the robotic gripper 300 transitions between profiles.

Operation 1006 can include driving the first and second motors 302a, 302b to actuate the one or more gears 308 in the first and second gear housings 330a, 330b to rotate the first finger links 314 about the first pivot points 318 on the axis of rotation A to adjust the orientation and position of the first and second finger links 314, 316 of the robotic gripper 300.

Operation 1006 can include monitoring the position of the robotic gripper 300 as the robotic gripper 300 changes its profile. In such instances, the one or more encoders 304 can be used to monitor the position and orientation of the first and second arms 310a, 310b. Monitoring the position and profile of the first and second arms 310a, 310b can facilitate error recovery in case power is lost by the robotic transport system 200, or an accident occurs such as when the first and second arms 310a, 310b accidentally crash into an instrument.

In some examples, operation 1006 includes locking the position and orientation of the finger linkages 312 to have the first profile 700, the second profile 800, or the third profile 900 between the first and second profiles 700, 800. In such instances, the worm gear 340 is used to lock a current profile of the finger linkages 312. Locking the position and orientation of the finger linkages 312 can occur when there is a power outage such as when the first and/or second motors 302a, 302b lose power. Locking the position and orientation of the finger linkages 312 can prevent damage to the finger linkages 312 or the instruments in the laboratory workspace 100 by preventing the finger linkages 312 and the labware from crashing into the instruments.

The method 1000 includes an operation 1008 of moving the robotic gripper 300 in at least one of the first axis A1, the second axis A2, and the third axis A3 to position the robotic gripper 300 adjacent to a second instrument in the laboratory workspace 100. The second instrument can include any of the other instruments in the laboratory workspace 100 such as the incubator 102, the freezer 104, the flow cytometer 106, the imaging reader 108, the liquid handler 110, the centrifuge 112, or other type of instrument.

The order of operations 1006, 1008 in the method 1000 may vary. For example, in some instances, operation 1008 can be performed after operation 1006 such that method 1000 can include moving the robotic gripper 300 to position the robotic gripper 300 adjacent to the second instrument after adjusting the profile of the robotic gripper 300. In other instances, operation 1008 can be performed before operation 1006 such that the method 1000 can include moving the robotic gripper 300 to position the robotic gripper 300 adjacent to the second instrument before adjusting the profile of the robotic gripper 300. In yet further examples, operations 1006, 1008 in the method 1000 can occur simultaneously such that the method 1000 can include moving the robotic gripper 300 to position the robotic gripper 300 adjacent to the second instrument while simultaneously adjusting the profile of the robotic gripper 300.

The method 1000 includes an operation 1010 of controlling the robotic gripper 300 to drop off the labware in the second instrument. Operation 1010 can include moving the gripper interfaces 326 to drop off the labware. For example, operation 1010 can include moving the first and second gear housings 330a, 330b along the rail 334 such that the first and second arms 310a, 310b move farther apart along the axis of rotation A, which causes the first and second gripper interfaces 326a, 326b to disengage and drop off the labware.

In view of the foregoing, when in operation, the robotic transport system 200 is able to drive the robotic gripper 300 to a desired profile at a first instrument or location, grip labware at the first location or instrument, change the profile of the robotic gripper 300 while holding the labware in transit, and place the labware at a second instrument or location with the alternative profile with no need for use or interaction with an intermediate gripper exchange station.

The various embodiments described above are provided by way of illustration only and should not be construed to be limiting in any way. Various modifications can be made to the embodiments described above without departing from the true spirit and scope of the disclosure.

## Claims

1. A robotic transport system comprising:
a robotic gripper; and
a processing circuitry having a memory for storing instructions which, when executed by the processing circuitry, cause the processing circuitry to:
move the robotic gripper in at least one of a first axis, a second axis, and a third axis to be adjacent to a first instrument, the first axis, the second axis, and the third axis being mutually perpendicular with respect to one another;
control the robotic gripper to pick up labware from the first instrument;
adjust the robotic gripper to change from a first profile to a second profile;
move the robotic gripper in at least one of the first axis, the second axis, and the third axis to be adjacent to a second instrument; and
control the robotic gripper to position the labware in the second instrument.

2. The robotic transport system of claim 1, wherein the robotic gripper includes:
a first arm including:
a first finger link extending between a proximal end and a distal end, the first finger link rotatably connected to a gear housing at the proximal end, and the first finger link being rotatably connected to a gripper interface at the distal end; and
a second finger link extending between a proximal end and a distal end, the second finger link rotatably connected to the gear housing at the proximal end, and the second finger link being rotatably connected to the gripper interface at the distal end.

3. The robotic transport system of claim 2, wherein the robotic gripper includes:
a second arm including:
a first finger link extending between a proximal end and a distal end, the first finger link rotatably connected to a gear housing at the proximal end, and the first finger link being rotatably connected to a gripper interface at the distal end; and
a second finger link extending between a proximal end and a distal end, the second finger link rotatably connected to the gear housing at the proximal end, and the second finger link being rotatably connected to the gripper interface at the distal end.

4. The robotic transport system of claim 3, wherein the first profile causes the first and second arms to be parallel in a horizontal position.

5. The robotic transport system of claim 4, wherein the second profile causes the first and second arms to be parallel in a vertical position.

6. The robotic transport system of claim 5, wherein an orientation of the gripper interfaces of the first and second arms remains constant as the first and second arms transition between the first profile and the second profile.

7. The robotic transport system of claim 1, wherein the memory stores additional instructions which, when executed by the processing circuitry, further cause the processing circuitry to:
adjust the first and second arms to have a third profile positioned between the first profile and the second profile.

8. The robotic transport system of claim 1, further comprising:
an encoder to monitor a position of the first and second arms.

9. The robotic transport system of claim 1, further comprising:
a worm gear to lock a current profile of the first and second arms.

10. A method of transporting labware between instruments in a laboratory workspace, the method comprising:
moving a robotic gripper in at least one of a first axis, a second axis, and a third axis to be adjacent to a first instrument in the laboratory workspace, the first axis, the second axis, and the third axis being mutually perpendicular with respect to one another;
controlling the robotic gripper to pick up labware from the first instrument;
adjusting the robotic gripper to change from a first profile to a second profile;
moving the robotic gripper in at least one of the first axis, the second axis, and the third axis to be adjacent to a second instrument in the laboratory workspace; and
controlling the robotic gripper to position the labware in the second instrument.

11. The method of claim 10, wherein the first profile causes the robotic gripper to have a horizontal position.

12. The method of claim 11, wherein the second profile causes the robotic gripper to have a vertical position.

13. The method of any of claims 10-12, wherein an orientation of a gripper interface remains constant as the robotic gripper transitions between the first profile and the second profile.

14. The method of any of claims 10-13, further comprising:
adjusting the robotic gripper to have a third profile positioned between the first profile and the second profile.

15. The method of claim 14, further comprising:
monitoring a position of the robotic gripper between the first profile and the second profile; and
locking the position of the robotic gripper to have the first profile, the second profile, or the third profile positioned between the first profile and the second profile.
